# EUROPÄISCHE PATENTSCHRIFT

(11) **EP 3 697 192 B1**
(45) Veröffentlichungstag und Bekanntmachung des Hinweises auf die Patenterteilung: **31.05.2023**
(21) Anmeldenummer: 18795944.0
(22) Anmeldetag: 12.10.2018
(51) Int. Cl.: A01D 17/10

(54) **FÖRDERVORRICHTUNG**
CONVEYOR DEVICE
DISPOSITIF DE TRANSPORT

(30) Priorität: 20.10.2017 DE 102017124616
(43) Veröffentlichungstag der Anmeldung: 26.08.2020
(73) Patentinhaber: Grimme Landmaschinenfabrik GmbH & Co. KG, 49401 Damme (DE)
(72) Erfinder: LANDSBERG, Jörg, 49401 Damme (DE); REDEL, Stefan, 49401 Damme (DE); KOMOSSA, Hendrik, 59348 Lüdinghausen (DE); HÖNEMANN, Heinrich, 49076 Osnabrück (DE)
(74) Vertreter: Wischmeyer, André
(86) Internationale Anmeldenummer: PCT/EP2018/077947
(87) Internationale Veröffentlichungsnummer: WO 2019/076772

(56) Entgegenhaltungen:
- EP-A1- 2 420 125
- EP-B1- 2 420 125
- DE-A1-102004 044 303
- DE-C1- 3 529 464
- DE-U1- 20 116 382
- DE-U1-202005 008 426
- US-A- 1 199 703

## Beschreibung

Die Erfindung betrifft eine Fördervorrichtung für eine aufwärts gerichtete, insbesondere vertikale Förderung von Rüben oder anderen Hackfrüchten in Erntemaschinen. Die Fördervorrichtung umfasst ein Förderband mit zumindest zwei im Betrieb in eine Förderrichtung bewegten seitlichen Förderbandabschnitten. Die Förderbandabschnitte definieren zwischen sich eine insbesondere ebene, virtuelle Förderbandfläche. Die Fördervorrichtung umfasst zumindest eine von der Förderbandfläche einseitig abstehende und sich am Förderband abstützende Mitnehmereinheit, die einen Aufnahmeraum begrenzt, welcher sich zu beiden Seiten der Förderbandfläche erstreckt.

Eingesetzt werden derartige Fördervorrichtungen beispielsweise in selbstfahrenden oder gezogenen Erntemaschinen für insbesondere Rüben oder Kartoffeln. Das Förderband ist dabei im Betrieb umlaufend. Die Fördervorrichtung nimmt während eines Umlaufs Hackfrüchte auf und gibt sie an einer höhergelegenen Position wieder ab. Die Fördervorrichtung wird im Einsatz in der Erntemaschine angetrieben und während des Umlaufens geführt bzw. umgelenkt.

Die Mitnehmereinheit dient dem Abstützen bzw. Tragen der Hackfrüchte während der aufwärts gerichteten Förderung. Währendderer befinden sich die Hackfrüchte in dem Aufnahmeraum, der sich von der Mitnehmereinheit durch die gedachte oder virtuelle Förderbandfläche hindurch auf deren gegenüberliegende Seite erstreckt. Die Förderbandfläche entspricht somit einer Schnittfläche, die zwischen beispielsweise als Riemenabschnitte ausgebildeten Förderbandabschnitten ausgebildet ist. Die Mitnehmereinheit steht zumindest einseitig von der Förderbandfläche ab, ihre Erstreckungsrichtung weist weg von der Förderbandfläche. Auf der gegenüberliegenden Seite ist der Aufnahmeraum üblicherweise durch einen Teil des Förderbandes beispielsweise durch abgekröpfte Siebstäbe ausgebildet. Ein seitliches, beispielsweise als Riemen ausgebildetes endloses Zugelement einer Fördervorrichtung ist in eine Mehrzahl von einander nachfolgenden Förderbandabschnitten unterteilt.

Durch derartige Fördervorrichtungen werden in der Praxis beispielsweise Ringelevatoren ausgebildet. Dabei läuft das Förderband um einen anderen Erntemaschinenteil um, wobei die Mitnehmereinheit innenseitig von der Förderbandfläche absteht. Während eines Umlaufes nimmt der Aufnahmeraum Hackfrüchte auf, und befördert sie aufwärts. Die Fördervorrichtung ist so konfiguriert, dass sie ihre maximale Förderleistung bei Hackfrüchten bestimmter Art und Größe erreicht.

Die DE 10 2004 044 303 A1 offenbart einen sogenannten Höhenförderer für Erntemaschinen, der taschenartig ausgebildete Abschnitte, die anstelle bekannter Mitnehmereinheiten zwischen zwei Riemen angeordnet und aus flexibler Plane oder als Netz ausgebildet sind.

In der US 1,199,703 A werden Förderbandabschnitte durch Taschen ausgebildet, die von zwei benachbarten, jeweils schwenkbar an zwei Ketten beidseitig gelagerten Rosten gebildet werden.

Aus der EP 2 420 125 A1 ist weiterhin eine Fördervorrichtung für Hackfruchterntemaschinen bekannt, bei der das Förderorgan aus einzelnen Flächenelementen zusammengesetzt ist, die in Form von einstückigen Strukturkörpern als integrale und funktionale Teilbereiche zumindest einen Mitnehmer und eine Ablagefläche definieren und durch Aneinanderreihung eine an sich bekannte Vielzahl von Fördertaschen ausbilden. Die Flächenelemente sind durch gelenkartige Verbindungszonen aneinander gekoppelt und als Spritzgußteile ausgebildet.

Aus der DE 35 29 464 C1 ist es bekannt, Fördertaschen durch zwei parallel zueinander verlaufende Siebbänder auszubilden, von denen eines den Zwischenraum zwischen den beiden Siebbändern überbrückende Mitnehmer besitzt.

Weiterhin ist es in der DE 20 2005 008 426 U1 offenbart, zwischen zwei parallel zueinander umlaufend angetriebenen Förderriemen und diese verbindenden Querstreben ein Fördertuch aufzuspannen, welches entlang seinen Seiten an den Förderriemen befestigt ist.

Schließlich ist es aus der DE 201 16 382 U1 bekannt, zwischen den Querstreben eines Förderbandes aufklipsbare Flächenelemente vorzusehen, die seitlich ebenfalls an den Förderriemen befestigt sind.

Aus der US 3,788,453 ist ein Höhenförderer für empfindliche Produkte bekannt.

Aufgabe der vorliegenden Erfindung ist die Bereitstellung einer zuverlässigen und besser an unterschiedliche Anwendungsfälle anpassbaren Fördervorrichtung sowie einer entsprechenden Erntemaschine.

Erfindungsgemäß wird die Aufgabe durch eine Betätigungsvorrichtung der vorbezeichneten Art gelöst, bei der der Teil des Aufnahmeraumes, der auf der der Mitnehmereinheit gegenüberliegenden Seite der virtuellen Förderbandfläche angeordnet ist, durch zumindest ein lösbar befestigtes Taschenmodul ausgebildet ist, wobei das Taschenmodul zwei parallel angeordnete Taschenzugelemente aufweist, die durch zumindest ein insbesondere metallisches oder aus Kunststoff bestehendes Wandungselement miteinander verbunden sind, wobei das Taschenmodul eine Mehrzahl von Wandungselementen aufweist, die als insbesondere äquidistante und quer zur Förderrichtung verlaufende Streben ausgebildet sind.

Die Förderbandabschnitte definieren die virtuelle Förderbandfläche insofern, als dass sie sich zumindest quer zur Förderrichtung geradlinig durch beide Förderbandabschnitte hindurch erstreckt. Die Förderbandfläche erstreckt sich entlang der Förderrichtung der Fördervorrichtung und ist insbesondere zumindest teilweise eben. Die Förderbandfläche trennt einen Raum in zwei Seiten, welche wiederum Räume definieren. Der Aufnahmeraum wird durch die Förderbandfläche geschnitten. Der einseitige Teil des Aufnahmeraumes wird abschnittsweise durch die Mitnehmereinheit begrenzt. Der andere Teil des Aufnahmeraumes, welcher auf der zweiten Seite der Förderbandfläche angeordnet ist, wird durch das Taschenmodul mit ausgebildet. Insbesondere bilden die seitlichen Zugelemente einer Fördervorrichtung jeweils eine Vielzahl von in Umlaufrichtung einander nachfolgenden Förderbandabschnitten aus.

Der Teil des Aufnahmeraumes, welcher sich auf der zweiten Seite der Förderbandfläche befindet, auf welcher auch das Taschenmodul angeordnet ist, hat vorzugsweise eine taschenförmige Ausprägung. Die Taschenform wird dadurch realisiert, dass die einzige Öffnung dieses Teils des Aufnahmeraumes in der Förderbandfläche liegt. Alternativ kann dieser Teil des Aufnahmeraumes auch in eine von der Mitnehmereinheit abgewandte Richtung offen sein. Das Taschenmodul begrenzt den Aufnahmeraum zumindest in eine zur Förderbandfläche rechtwinklige Richtung. Der Aufnahmeraum ist dabei sowohl durch die Mitnehmereinheit als auch durch das Taschenmodul insofern begrenzt, als dass die Hackfrüchte nicht durch das Taschenmodul oder durch die Mitnehmereinheit hindurchtreten können.

Die Förderbandabschnitte, welche in der Förderbandfläche liegen bzw. diese aufspannen, übertragen eine Zugkraft, die von einem Antriebsaggregat der Erntemaschine mittelbar oder unmittelbar auf das Förderband aufgebracht wird. Die Förderbandabschnitte sind bevorzugt so angeordnet, dass sich der Aufnahmeraum zwischen ihnen erstreckt. Die Förderbandabschnitte sind außerdem bevorzugt als Teile von umlaufenden, separaten Riemen oder Bänder ausgestaltet, können in einer alternativen bevorzugten Ausgestaltungsform der erfindungsgemäßen Fördervorrichtung jedoch auch einstückig und insbesondere im Bereich der Mitnehmereinheit miteinander verbunden sein.

Die Mitnehmereinheit ist ebenso wie das Taschenmodul am Förderband abgestützt, d. h. mittelbar oder unmittelbar daran befestigt. Sie trägt die Hackfrüchte während der Förderung zumindest teilweise und verhindert ein Hinunterrollen während des Förderns. Die Mitnehmereinheit umfasst vorzugsweise eine Lippe oder eine Vielzahl von Fingern oder Bügeln, die insbesondere im Wesentlichen rechtwinklig von der Förderbandfläche abstehen. Besonders bevorzugt ist das von der Förderbandfläche abgewandte Ende der Mitnehmereinheit zumindest anteilig in Förderrichtung verlaufend ausgeformt, um zur Fassung einer Mehrzahl von Hackfrüchten eine erweiterte Umgrenzung des Aufnahmeraumes zu erreichen. Die Mitnehmereinheit hat insbesondere zusätzlich eine Erstreckung in der zweiten Seite der Förderbandfläche, bevorzugt hat die Mitnehmereinheit dabei von der Förderbandfläche ausgehend eine Haupterstreckung in eine vom Taschenmodul abgewandte Richtung.

Sowohl die Mitnehmereinheit als auch das Taschenmodul sind im Betrieb mit dem Förderband umlaufend in der Erntemaschine angeordnet. Dabei bewegt sich das Förderband im Betrieb in eine Förderrichtung und ist dabei umlaufend. Die Förderrichtung variiert während des Betriebes zyklisch, wobei die Fördervorrichtung vorzugsweise einen Abschnitt hat, in dem die Förderrichtung im Betrieb zeitweise konstant und besonders bevorzugt vertikal relativ zu einem Boden, auf dem die Erntemaschine steht oder fährt, angeordnet ist, um einen Höhenunterschied möglichst effizient zu überwinden.

Das Taschenmodul begrenzt den Aufnahmeraum zumindest seitlich, in eine rechtwinklig zur Förderbandfläche angeordnete Richtung, und hat somit eine signifikante Erstreckung sowohl in Förderrichtung als auch quer dazu in eine zur Förderbandfläche parallele Richtung. Vorzugsweise ist das Taschenmodul von außen am Förderband oder an der Mitnehmereinheit befestigt und davon lösbar. Das Taschenmodul schneidet nicht die Förderbandfläche und wird beim Abbau in eine von der Förderbandfläche abgewandte Richtung vom Förderband gelöst. Das Taschenmodul ist von der Fördervorrichtung modular abnehmbar und austauschbar, d.h. als Ganzes vom Rest der Fördervorrichtung trennbar und daran lösbar zu fixieren.

Die erfindungsgemäße Fördervorrichtung kann zur Ausbildung eines Ringelevators mit einer Mehrzahl an in Förderrichtung voneinander beabstandeten Aufnahmeräumen versehen sein. Dabei sind die Mitnehmereinheiten nach innen, in den durch das Förderband aufgespannten Innenraum gerichtet.

Vorteil des lösbar befestigten Taschenmoduls ist die Möglichkeit eines einfachen und schnellen Austauschs dessen. Dadurch kann die Größe der Aufnahmeräume sowie die Form der Begrenzung derer einfach variiert werden, wodurch sowohl die Fördervorrichtung als auch die Erntemaschine an unterschiedliche Bedingungen angepasst werden kann. Insbesondere kann durch die mögliche Variation der Taschenmodule die Förderleistung für unterschiedliche Bedingungen, wie z. B. unterschiedliche zu fördernde Früchte, maximiert werden. Dadurch ist die Fördervorrichtung besonders flexibel mit erhöhten Förderleistungen bei unterschiedlichen Einsatzbedingungen einsetzbar. Darüber hinaus wird durch das zumindest eine lösbar befestigte Taschenmodul die Handhabbarkeit sowohl der Fördervorrichtung als auch etwaiger in einer Erntemaschine von der Fördervorrichtung umschlossener Maschinenteile, insbesondere deren Wartung und Reparatur, durch die verbesserte Zugänglichkeit bei gelöstem Taschenmodul wesentlich vereinfacht.

Vorzugsweise weist die Fördervorrichtung zumindest zwei in der Förderrichtung aneinander anschließende Taschenmodule auf. Dadurch werden insbesondere mehrere Aufnahmeräume unterschiedlicher Umfangsabschnitte der Fördervorrichtung durch mehrere Taschenmodule ausgebildet. Alternativ wird zumindest ein Aufnahmeraum durch mehrere Taschenmodule ausgebildet. Bevorzugt wird jeder Aufnahmeraum von nur einem Taschenmodul auf der der Mitnehmereinheit entgegengesetzten Seite der Förderbandfläche mit ausgebildet. Aneinander anschließende Taschenmodule haben entweder einen unmittelbaren Kontakt oder einen geringfügigen Abstand zueinander. Der Abstand ist dabei maximal so groß wie derjenige von zwei in Förderrichtung benachbarten Mitnehmereinheiten. Durch die Mehrzahl an Taschenmodulen wird der Austausch dieser im Vergleich zu dem Austausch eines entsprechend größeren Taschenmoduls bedeutend vereinfacht. Insbesondere kann dadurch die für den Austausch nötige Zeit gegenüber der gemäß dem Stand der Technik nötigen Zeit für den Austausch der gesamten Fördervorrichtung reduziert werden und die Förder- und Ernteleistung der Erntemaschine durch verkürzte Umbauzeiten gesteigert werden.

Bevorzugt bildet jedes Taschenmodul höchstens sechs, insbesondere höchstens drei Aufnahmeräume mit aus. Diese Aufnahmeräume sind dabei in Förderrichtung benachbarte Aufnahmeräume. Durch die Begrenzung des Ausmaßes der Taschenmodule in Förderrichtung können diese besonders einfach gehandhabt werden und entsprechend schneller ausgetauscht werden, wodurch die Betriebszeit und somit Gesamtförderleistung der Fördervorrichtung gesteigert wird.

Mit Vorteil haben aneinander anschließende Taschenmodule unmittelbar Kontakt und bilden eine mit dem Förderband umlaufende Kette von Taschenmodulen, die entlang der Förderrichtung keine Lücke aufweist. Dadurch können alle Aufnahmeräume besonders zuverlässig begrenzt werden, was eine hohe Förderleistung sicherstellt.

Besonders bevorzugt bildet jedes Taschenmodul genau einen Aufnahmeraum aus. Dadurch können die Ausmaße der Taschenmodule bei optimaler Aufnahmeraumgröße weiter verringert werden und sie sind besonders handlich. Dadurch kann wiederum die für einen Austausch nötige Zeit reduziert und die Förderleistung maximiert werden.

In einer vorteilhaften Ausgestaltung der Erfindung sind durch zumindest eine Befestigungseinrichtung jeweils zwei in Förderrichtung aneinander anschließende Taschenmodule lösbar festgelegt. Durch die Befestigungseinrichtung werden die aneinander anschließenden Taschenmodule mittelbar oder unmittelbar an zumindest einem der Förderbandabschnitte abgestützt. Die Befestigungseinrichtung kontaktiert die Taschenmodule entweder in mehreren unterschiedlichen Bereichen oder in nur einem zusammenhängenden Bereich. Bevorzugt befinden sich im Bereich eines Förderbandteilstückes zwei Befestigungseinrichtungen, die jeweils beide aneinander anschließende Taschenmodule festlegen. Besonders bevorzugt befindet sich eine Befestigungseinrichtung im Bereich des einen seitlichen Förderbandabschnittes und die andere Befestigungseinrichtung im Bereich des anderen seitlichen Förderbandabschnittes. Die aneinander anschließenden Taschenmodule grenzen entweder unmittelbar aneinander oder sind mit einem Abstand zueinander an der zumindest einen Befestigungseinrichtung festgelegt. Vorteil der Nutzung einer Befestigungseinrichtung zur Festlegung zweier Taschenmodule ist, dass dadurch die Zeit zur Festlegung der Taschenmodule an der Fördervorrichtung insofern reduziert werden kann, als dass durch die Betätigung einer Befestigungseinrichtung gleichzeitig zwei Taschenmodule zumindest bereichsweise festgelegt werden können. Bevorzugt werden mehrere Befestigungseinrichtungen, welche in Förderrichtung auf einer Höhe liegen bzw. nebeneinander liegen, über beispielsweise einen umzulegenden Hebel betätigt. Dadurch ist der Arbeitsaufwand, welcher zur Befestigung der Taschenmodule an der Fördervorrichtung nötig ist, weiter verringert und somit die Betriebszeit gegenüber der für den Umbau nötigen Zeit und die Förderleistung erhöht. Vorzugsweise ist das Taschenmodul zumindest im Bereich der Mitnehmereinheit, insbesondere an der Mitnehmereinheit, durch zumindest eine Befestigungseinrichtung festgelegt. Dabei befinden sich die Mitnehmereinheit und die Befestigungseinrichtung bevorzugt zumindest teilweise in Förderrichtung auf einer Höhe, wodurch sich Befestigungseinrichtung und Mitnehmereinheit in einer Draufsicht zumindest teilweise überschneiden. Vorzugsweise sind an der Mitnehmereinheit zumindest zwei in seitlicher Richtung voneinander beabstandete Befestigungseinrichtungen festgelegt. Dabei kann die Mitnehmereinheit als Teil der Befestigungseinrichtung wirken. Alternativ ist die Befestigungseinrichtung an den Förderbandabschnitten auf entsprechender Höhe festgelegt. Dadurch, dass das Taschenmodul in diesem Bereich festgelegt ist, kann der Aufnahmeraum besonders vorteilhaft ausgebildet werden. Insbesondere eine taschenförmig ausgebildete Ausstülpung des Taschenmoduls hat dabei im Bereich der Mitnehmereinheit einen Festlegungspunkt, indem das Taschenmodul nahe der oder in der Förderbandfläche festgelegt ist, von wo anschließend an die Mitnehmereinheit eine bauchige Ausstülpung ausgebildet werden kann, wodurch ein besonders voluminöser Aufnahmeraum ausgebildet werden kann. Weiterer Vorteil ist, dass die Festlegung des Taschenmoduls an der Mitnehmereinheit, welche eine größere Steifigkeit als die Förderbandabschnitte hat, leichter und damit schneller möglich ist, als an anderen Teilen der Fördervorrichtung. Außerdem vorteilhaft an der Festlegung in diesem Bereich ist, dass so besonders wirksam vermieden wird, dass Hackfrüchte während der Aufwärtsförderung den Aufnahmeraum durch eine Lücke zwischen Mitnehmereinheit und Taschenmodul verlassen können. Bevorzugt wird das Taschenmodul ausschließlich im Bereich der Mitnehmereinheit durch zumindest eine Befestigungseinrichtung festgelegt. Der Bereich der Mitnehmereinheit erstreckt sich in einer alternativen bevorzugten Ausführungsform auch auf ein in Förderrichtung benachbartes Förderbandteilstück, das maximal eine Länge hat, die einem Drittel des Abstandes zweier Mitnehmereinheiten entspricht. Dadurch, dass im Bereich zwischen den Mitnehmereinheiten das Taschenmodul nicht festgelegt ist, kann es sich hier optimal, d. h. mit durchgehendem größerem Abstand zur Förderbandfläche als im Festlegungspunkt, dieser wird insbesondere nicht durch weitere Befestigungseinrichtungen zwischen den Mitnehmereinheiten unterbrochen, wodurch der Aufnahmeraum durch eine Unterbrechung der gewünschten bauchigen Ausstülpung des Taschenmoduls begrenzt würde.

Alternativ wird das Taschenmodul bevorzugt zumindest im Bereich einer weiteren in Förderrichtung benachbarten Mitnehmereinheit oder zwischen dem Bereich der Mitnehmereinheit und dem Bereich der weiteren Mitnehmereinheit durch zumindest eine Befestigungseinrichtung festgelegt. Durch diese Festlegung an einem von den Bereichen der Mitnehmereinheiten abweichenden Abschnitt der Fördervorrichtung wird eine besonders stabile Festlegung des Taschenmoduls erreicht, wobei die Anzahl der Festlegungspunkte erhöht ist oder kleinere Ausmaße der Taschenmodule ermöglicht sind. Außerdem kann das Hindurchtreten der Hackfrüchte durch eine Lücke zwischen dem Taschenmodul und einem Förderbandabschnitt so vermieden werden. Dabei erstreckt sich das Taschenmodul zumindest vom Ort der Festlegung bis zum Bereich der Mitnehmereinheit. Vorzugsweise wird das Taschenmodul zusätzlich durch zumindest eine Befestigungseinrichtung im Bereich der Mitnehmereinheit festgelegt. Dadurch wird die Stabilität des Taschenmoduls weiter gesteigert, wodurch die Förderleistung erhöht ist.

In einer vorteilhaften Ausgestaltung der Erfindung umfasst die Befestigungseinrichtung zumindest ein eine Form des Aufnahmeabschnittes zumindest teilweise vorgebendes und am Taschenmodul anliegendes Formelement. Während der Festlegung liegt dieses Formelement am Taschenmodul unmittelbar an. Das Formelement gibt die Form des Taschenmoduls als Teil der Fördervorrichtung teilweise vor und optimiert dadurch die Form des Aufnahmeraumes im Bereich des an das Taschenmodul grenzenden Teils. Durch die Optimierung der Form des Aufnahmeraumes kann die Förderkapazität der Fördervorrichtung und damit die Förderleistung erhöht werden. Außerdem kann die Befestigungseinrichtung durch das Formelement an unterschiedlich geformte Taschenmodule angepasst werden und erleichtert dadurch die Anpassung der gesamten Fördervorrichtung.

Vorzugsweise wird durch das Formelement das Taschenmodul dergestalt angeordnet, dass der Teil des Aufnahmeraumes, welcher in einem Längsschnitt der Fördervorrichtung vom Taschenmodul und von der Förderbandfläche eingegrenzt ist, die Form eines halbierten Tropfens hat, welcher mit der Unterseite an den Bereich der Mitnehmereinheit angrenzt. Dabei ist das Taschenmodul im Bereich der Mitnehmereinheit und im Bereich der weiteren in Förderrichtung benachbarten Fördereinheit in oder nahe der Förderbandfläche befestigt und bildet einen bauchigen, von der Förderbandfläche abgewandten Teil des Aufnahmeraumes aus.

Vorzugsweise legt die Befestigungseinrichtung zwei aneinander anschließende Taschenmodule klemmend aufeinander und gegenüber der Mitnehmereinheit fest. In dieser Ausgestaltungsform überlappen sich aneinander anschließende Taschenmodule in Förderrichtung, wobei sich die Befestigungseinrichtung im Überlappungsbereich befindet. Die Taschenmodule werden vorzugsweise quer zur Förderrichtung geklemmt, insbesondere durch zumindest ein Formelement. Die Befestigungseinrichtung ist dabei an der Mitnehmereinheit festgelegt. Die Klemmung wird bevorzugt durch mindestens zwei über ein Gewinde miteinander verbundene Elemente, einen umzulegenden Hebel oder alternative Ausführungsformen der Befestigungseinrichtung erreicht. Vorteil der Klemmung überlappender Taschenmodule ist die besonders einfache und zuverlässige Form der Festlegung dieser, wodurch die für einen Austausch von Taschenmodulen nötige Zeit verkürzt und die langfristige Leistungsfähigkeit der Fördervorrichtung erhöht werden kann.

Bevorzugt hat das Taschenmodul zumindest zwei in Förderrichtung benachbarte und jeweils an eine Befestigungseinrichtung grenzende Befestigungsbereiche. Deren Abstand als Teil der Fördervorrichtung ist kleiner als die Länge des Taschenmoduls zwischen den Befestigungsbereichen in einem von der Fördervorrichtung getrennten und abgerollten Zustand. Das Taschenmodul ist dabei zumindest um eine zur Förderrichtung orthogonale Biegeachse biegsam und bildet im Betrieb an der Fördervorrichtung eine Ausstülpung aus, wodurch der Abstand des Taschenmoduls von der Förderbandfläche am Aufnahmeraum variiert. Dadurch wird erreicht, dass das Taschenmodul bezüglich der Förderbandabschnitte während des Umlaufens zugentlastet ist und seine Form vom Abstand der daran anliegenden Befestigungseinrichtungen sowie der Gewichtskraft des Taschenmoduls und etwaiger geförderter Hackfrüchte wesentlich beeinflusst wird. Daraus folgt, dass während einer Umlenkung des Förderbandes das Taschenmodul, welches von der Förderbandfläche beabstandet festgelegt ist, zeitweilig in Förderrichtung verlängert oder verkürzt wird, das Taschenmodul jedoch nie durch von der Erntemaschine auf die Förderbandabschnitte aufgebrachte Kräfte belastet wird. Dadurch ist zum einen die Zuverlässigkeit des Taschenmoduls und damit die Förderleistung der Fördervorrichtung erhöht und gleichzeitig die spannungslose und damit vereinfachte Montage des Taschenmoduls ermöglicht, die eine anteilige Erhöhung der Betriebszeit ermöglicht.

Erfindungsgemäß weist das Taschenmodul zwei parallel angeordnete Taschenzugelemente auf, die durch zumindest ein insbesondere metallisches oder aus Kunststoff bestehendes Wandungselement miteinander verbunden sind. Die Taschenzugelemente verlaufen dabei im Wesentlichen in Förderrichtung und benachbart zu jeweils einem Förderbandabschnitt und sind verformbar. Das Wandungselement ist an beiden Taschenzugelementen festgelegt und begrenzt den Aufnahmeraum. Durch diesen Aufbau ist das Taschenmodul besonders stabil und eine erhöhte Förderleistung erreichbar. Besonders bevorzugt ist das Wandungselement metallisch, wodurch eine maximale Stabilität erreicht und der Abstand der Taschenzugelemente konstant gehalten wird. Alternativ besteht das Wandungselement bevorzugt aus Kunststoff, wodurch ein besonders geringes Gewicht des Taschenmoduls realisiert werden kann, das dessen Montage erleichtert. Ein aus Kunststoff bestehendes Wandungselement ist insbesondere ein glasfaserverstärktes Verbundbauteil. Durch die Zugentlastung des Taschenmoduls kommt es zu keiner wesentlichen Änderung der Abstände der Wandungselemente zueinander während eines Umlaufes. Dadurch können sich keine Hackfrüchte zwischen den Wandungselementen verkeilen oder gequetscht werden, was das Anwendungsgebiet der Erntemaschine auch auf solche Früchte erweitert, die eines besonders schonenden Umgangs bedürfen. Durch die Nutzung identischer Taschenzugelemente für Taschenmodule mit unterschiedlich großen und durch das Wandungselement begrenzten Ausnehmungen lässt sich die Auswechselung von Taschenmodulen vereinfachen und vereinheitlichen.

Erfindungsgemäß weist das Taschenmodul weiterhin eine Mehrzahl von Wandungselementen auf, die als insbesondere äquidistante und quer zur Förderrichtung verlaufende Streben ausgebildet sind. Die Taschenzugelemente sind dabei durch eine Vielzahl von sich quer zur Haupterstreckungsrichtung der Taschenzugelemente erstreckenden Streben miteinander verbunden, die vorzugsweise einen identischen Abstand zu ihren jeweiligen benachbarten Streben haben. Gemäß einer weiteren erfindungsgemäßen Ausgestaltung kann der Abstand der Streben in Förderrichtung variieren, insbesondere dergestalt, dass ausgehend von der Mitnehmereinheit die Streben in Förderrichtung zumindest teilweise einen zunehmenden Abstand zueinander haben. Das Taschenmodul hat bevorzugt die Form eines Siebbandteilstückes, welches so am Förderband montiert wird, dass ein Teil des Taschenmoduls durchhängt bzw. einen bauchigen oder S-förmigen Querschnitt ausbildet, da seine Erstreckung in Förderrichtung im ausgerollten Zustand größer ist als im montierten Zustand. Durch diese Ausführungsform wird eine besonders zuverlässige Begrenzung des Aufnahmeraumes erreicht, wobei die Streben entlang eines kompletten Umlaufs des Förderbandes, nach dessen Ende sich jedes Förderbandteilstück am gleichen Ort befindet wie vor dem Umlauf, in der Erntemaschine den gleichen Abstand zueinander behalten, da die Taschenmodule nur unwesentlichen Zugbelastungen standhalten müssen. Durch die Mehrzahl der Streben lässt sich das Taschenmodul darüber hinaus besonders einfach handhaben und dadurch einfacher montieren und demontieren.

Durch die Wandungselemente wird insbesondere während des Aufgebens von Hackfrüchten und Beimengungen auf die Fördervorrichtung eine Reinigungswirkung erreicht. Durch sich relativ zueinander bewegende Hackfrüchte und durch das Reiben dieser an der Begrenzung des Aufnahmeraumes wird Schmutz von diesen gelöst, der den Aufnahmeraum durch das Taschenmodul verlassen kann. Das ist durch die Schwerkraft insbesondere dann der Fall, wenn der Aufnahmeraum während des Umlaufens so orientiert ist, dass er nach unten, an einer dem Boden zugewandten Seite, durch das Taschenmodul begrenzt wird.

Zur optimalen Anpassung an unterschiedliche Erntebedingungen und Hackfrüchte werden Taschenmodule der beschriebenen Ausführungsform genutzt, wobei diese modular austauschbar sind für solche mit anderen Abständen zwischen den Wandungselementen oder einer unterschiedlichen Elastizität der Taschenzugelemente.

In einer alternativen vorteilhaften Ausgestaltung des Taschenmoduls ist dieses als formstabiler Korb ausgebildet. Dieser ist ebenso zugentlastet und insofern formstabil, als dass der Korbinnenraum, den das Taschenmodul aufspannt, während eines Umlaufes der Fördervorrichtung maximal um einen Faktor 2 variiert. Insbesondere ist die Form weitgehend unabhängig vom Füllzustand, d. h. von der Anzahl an Hackfrüchten, welche vom Taschenmodul aufgenommen sind, und von der Orientierung des Taschenmoduls im Raum, welche während des Umlaufs des Förderbandes variiert. Durch die Nutzung eines solchen Korbes kann die Größe des Aufnahmeraumes während des Umlaufs der Fördervorrichtung weitgehend konstant gehalten werden, wodurch die Förderleistung maximiert ist. Die Formstabilität der Taschenmodule erleichtert wiederum die Handhabung dieser.

Bevorzugt ist das Taschenmodul aus Kunststoff ausgebildet. Dadurch kann das Gewicht des Taschenmoduls weitest möglich verringert werden, wodurch die Montage und Demontage vereinfacht ist. Dadurch ist die Fördervorrichtung besonders flexibel einsetzbar.

Besonders bevorzugt ist das Taschenmodul einstückig ausgebildet. Bei dieser Ausbildung gibt es keine risikobehafteten Befestigungsstellen im Taschenmodul insbesondere zwischen unterschiedlichen Werkstoffen, wodurch die Stabilität des Taschenmoduls gefährdet wird. Weiterhin vereinfacht ein einstückiges Taschenmodul seinen Austausch signifikant.

In einer vorteilhaften Ausgestaltung der Erfindung weist das Förderband zumindest zwei, insbesondere doppelt so viele wie Mitnehmereinheiten an den Förderbandabschnitten angeordnete und der Mitnehmereinheit bzw. den Mitnehmereinheiten zugeordnete Strebenelemente auf. Diese Strebenelemente sind an beiden Förderbandabschnitten insbesondere mit Nieten befestigt und verlaufen quer zur Förderrichtung. Diese Strebenelemente sind als Paar angeordnet und jedes Paar einer Mitnehmereinheit zugeordnet und stützt dieses ab. Durch die Nutzung zweier separater Strebenelemente kann das Förderband ein durch die Mitnehmereinheit abgestütztes Drehmoment besonders zuverlässig aufnehmen. Dazu ist die Mitnehmereinheit an beiden Strebenelementen angeordnet. Die erhöhte Zuverlässigkeit der Abstützung bewirkt eine insgesamt erhöhte Förderleistung. Genau zwei der Mitnehmereinheit zugeordnete Strebenelemente sind vorteilhaft, da die mit einer Mehrzahl an Strebenelementen einhergehende Mehrzahl an Verbindungen an den Förderbandabschnitten deren Zugfestigkeit beeinträchtigt, jedoch zwei Strebenelemente eine zuverlässige Drehmomentabstützung für die Mitnehmereinheiten sicherstellen. Weiterer Nachteil an einer Mehrzahl an Verbindungen zwischen den Strebenelementen und den Förderbandabschnitten, welche insbesondere als Nietverbindungen ausgestaltet sind, ist, dass ein Antriebselement, welches Kraft auf zumindest einen Förderbandabschnitt aufbringt, durch die Nietverbindungen und den metallischen Kontakt damit einen höheren Verschleiß hat, welcher durch nur zwei Strebenelemente pro Mitnehmereinheit minimiert ist. Somit bewirkt diese Mindestzahl an Strebenelementen eine maximale Stabilität der Fördervorrichtung. Diese Stabilität vereinfacht dadurch die Auswechslung des Taschenmoduls, dass der Rest der Fördervorrichtung bei der Festlegung des Taschenmoduls nur minimal ausweicht und somit die Montage erleichtert.

Die Aufgabe wird weiterhin durch eine Erntemaschine für Rüben oder dergleichen Hackfrüchte gelöst, die zumindest eine erfindungsgemäße Fördervorrichtung aufweist. Die erfindungsgemäße Fördervorrichtung wird vorzugsweise als Ringelevator eingesetzt. Dieser hat dabei eine Mehrzahl an Aufnahmeräumen, in welchen die Hackfrüchte von einem unteren Bereich der Erntemaschine in einen oberen Bereich verlagert werden. Der Ringelevator ist dabei um weitere Teile der Erntemaschine umlaufend und an den Seiten der Erntemaschine insbesondere an die Umgebung angrenzend. Durch die Fördervorrichtung ist die Erntemaschine flexibel einsetzbar und eine insgesamt höhere Leistungsfähigkeit ermöglicht. Darüber hinaus kommen in der erfindungsgemäßen Erntemaschine die vor- oder nachbeschrieben Vorteile der Fördervorrichtung zu.

Bevorzugt grenzt der Aufnahmeraum während des Betriebs der Fördervorrichtung zumindest abschnittsweise an zumindest ein sich in Förderrichtung erstreckendes und sich insbesondere nicht in Förderrichtung bewegendes Führungselement an. Dieses Führungselement befindet sich zumindest abschnittsweise zwischen einem der Förderbandabschnitte und dem Taschenmodul und begrenzt den Aufnahmeraum somit seitlich. Insbesondere ist das Führungselement als längliches Metallblech ausgestaltet, welches mehrere benachbarte Aufnahmeräume begrenzt. Vorteil des Einsatzes eines solchen Führungselementes ist die zuverlässige Vermeidung eines unbeabsichtigten Verlassens der Hackfrüchte des Aufnahmeraumes durch eine Lücke zwischen Taschenmodul und dem Förderband. Somit kann durch das Führungselement die Effizienz der Erntemaschine gesteigert werden. Dadurch, dass ein Teil der Begrenzung des auf der zweiten Seite angeordneten Aufnahmeraumes durch das Führungselement ausgebildet wird, kann das zumindest eine Taschenmodul bei konstanter Aufnahmeraumgröße kleiner sein. Ein kleineres Taschenmodul ist wiederum einfacher zu handhaben.

Vorzugsweise hat das Führungselement oder eine durch mehrere Führungselemente ausgebildete Führungseinrichtung einen U-förmigen Querschnitt, durch dessen Innenraum die Mitnehmereinheiten zumindest teilweise in Förderrichtung verlaufen. In dem Fall wird der Aufnahmeraum zumindest zeitweise während eines Umlaufes der Fördervorrichtung seitlich und an in einem vom Taschenmodul abgewandten Grenzbereich durch die relativ zur Erntemaschine ortsfeste Führungsvorrichtung bzw. das Führungselement begrenzt. Dadurch wird die Förderkapazität der Fördervorrichtung bei vertikaler Förderung erhöht und somit der Anwendungsbereich der Erntemaschine erweitert.

Besonders bevorzugt ist das Führungselement aus einer Führungsstellung in eine Transportstellung überführbar. In der Führungsstellung befindet es sich bei Betrieb der Fördervorrichtung und begrenzt dabei zumindest einen von deren Aufnahmeräumen. In der Transportstellung hat das Führungselement einen geringeren maximalen Abstand von der Förderbandfläche, insbesondere um die Gesamtbreite der Erntemaschine zu verringern. Bei Anwendung von elastischen Taschenmodulen ist es somit möglich, die Aufnahmeräume während des Betriebes der Erntemaschine über eine Transporterntemaschinenbreite hinaus zu vergrößern, welche bei einer Straßenfahrt maximal erlaubt ist. Somit ist die Erntemaschine an unterschiedliche Betriebssituationen einfach anzupassen. Dadurch ist in der Führungsstellung des Führungselementes eine erhöhte Förderleistung der Fördervorrichtung und somit der Erntemaschine ermöglicht. Insbesondere wird das Führungselement durch eine Schwenkbewegung um eine zur Förderbandfläche parallele Schwenkachse in die Transportstellung überführt. Diese Form der Überführung ist besonders einfach und somit zuverlässig.

In einer vorteilhaften Ausgestaltung der Erfindung hat die Erntemaschine eine den maximalen Abstand des Taschenmoduls von der Förderbandfläche und somit auch vom Zugelement in einer Sicherungsstellung begrenzende Sicherungsvorrichtung. Diese Sicherungsvorrichtung verhindert insbesondere bei einer Straßenfahrt der Erntemaschine eine zu große Breite des elastischen Taschenmoduls, welche bei einer maximalen Aufspannung im gefüllten Zustand der Aufnahmeräume erreicht werden kann. Insbesondere werden dazu die Taschenmodule für den Transport fixiert. Dadurch ist wiederum zum einen eine erhöhte Förderleistung der Fördervorrichtung im Betrieb der Erntemaschine ermöglicht und zum anderen die Möglichkeit einer Straßenfahrt mit der Erntemaschine gegeben, was den Anwendungsumfang und damit die Leistungsfähigkeit der Erntemaschine erhöht. Besonders bevorzugt ist das Führungselement Teil der Sicherungsvorrichtung, wodurch Bauraum gespart und dadurch eine erhöhte Förderleistung der Erntemaschine ermöglicht wird.

Weitere Einzelheiten und Vorteile der Erfindung sind den nachfolgend beschriebenen, schematisch dargestellten Ausführungsbeispielen zu entnehmen; es zeigen:
- Fig. 1: einen Abschnitt einer Fördervorrichtung ohne Taschenmodul in einer Übersichtsdarstellung,
- Fig. 2: einen Abschnitt eines ersten Ausführungsbeispiels einer erfindungsgemäßen Fördervorrichtung in einer Übersichtsdarstellung,
- Fig. 3: einen Abschnitt eines zweiten Ausführungsbeispiels der erfindungsgemäßen Fördervorrichtung in einer Seitenansicht,
- Fig. 4: den Abschnitt des zweiten Ausführungsbeispiels der erfindungsgemäßen Fördervorrichtung gemäß Fig. 3 in einer Erntemaschine mit Rüben in einer gespiegelten Seitenansicht,
- Fig. 5: ein erstes Ausführungsbeispiel einer Befestigungseinrichtung der erfindungsgemäßen Fördervorrichtung in einer Übersichtsdarstellung,
- Fig. 6: einen Abschnitt eines dritten Ausführungsbeispiels der erfindungsgemäßen Fördervorrichtung in einer Übersichtsdarstellung,
- Fig. 7: einen Abschnitt eines vierten Ausführungsbeispiels der erfindungsgemäßen Fördervorrichtung in einer Seitenansicht,
- Fig. 8: den Abschnitt des vierten Ausführungsbeispiels der erfindungsgemäßen Fördervorrichtung gemäß Fig. 7 in der Erntemaschine mit Rüben in einer gespiegelten Seitendarstellung,
- Fig. 9: ein zweites Ausführungsbeispiel der Befestigungseinrichtung der erfindungsgemäßen Fördervorrichtung in einer Übersichtsdarstellung,
- Fig. 10: einen Abschnitt eines nicht erfindungsgemäßen Ausführungsbeispiels einer Fördervorrichtung in einer Übersichtsdarstellung,
- Fig. 11: ein drittes Ausführungsbeispiel der Befestigungseinrichtung der erfindungsgemäßen Fördervorrichtung in einer Übersichtsdarstellung,
- Fig. 12: ein viertes Ausführungsbeispiel der Befestigungseinrichtung der erfindungsgemäßen Fördervorrichtung in einer Übersichtsdarstellung,
- Fig. 13: die erfindungsgemäße Fördervorrichtung in einer schematischen Seitendarstellung,
- Fig. 14: ein Antriebselement einer erfindungsgemäßen Fördervorrichtung mit einem Abschnitt der Fördervorrichtung ohne Taschenmodul in einer Seitenansicht.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen eines der unabhängigen Ansprüche. Sofern sinnvoll, sind funktional gleichwirkende Teile mit identischen Bezugsziffern versehen.

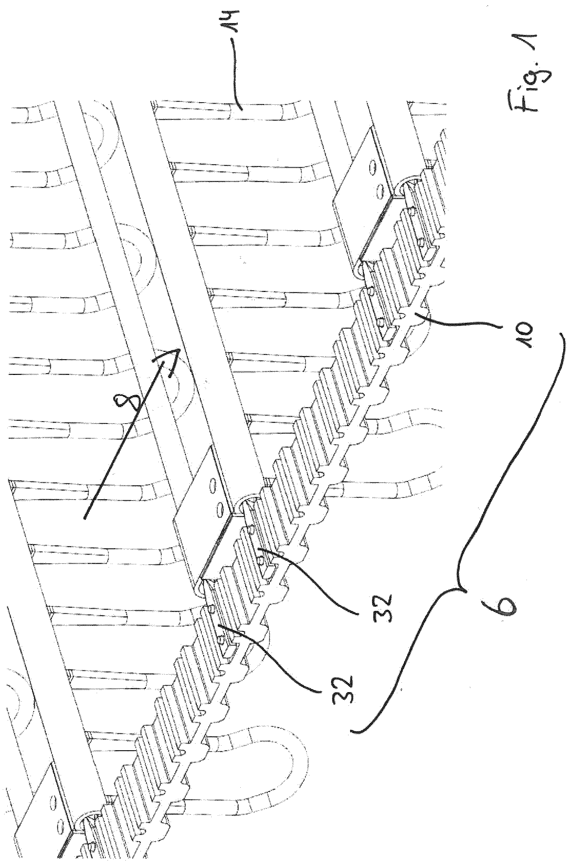

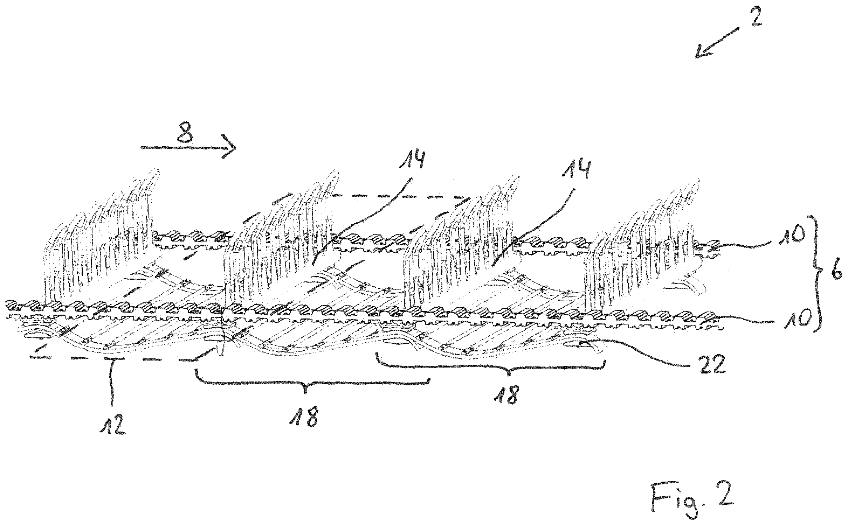

Die Fig. 2, 6 und 10 zeigen Abschnitte unterschiedlicher Ausführungsbeispiele erfindungsgemäßer Fördervorrichtungen 2. Diese dienen jeweils einer aufwärts gerichteten, insbesondere vertikalen Förderung von Rüben 4 oder dergleichen Hackfrüchten in Erntemaschinen. Die Fördervorrichtung 2 umfasst ein Förderband 6 mit Riemen, die definitionsgemäß in eine Vielzahl von im Betrieb in eine Förderrichtung 8 bewegten seitlichen, einander nachfolgenden Förderbandabschnitten 10 unterteilt sind. Das Förderband 6 ist somit aus einer Vielzahl von in Umlaufrichtung einander nachfolgenden Förderbandabschnitten 10 mit ausgebildet. Weiterhin Teil des Förderbandes 6 sind jeweils Strebenelemente 32, welche in Fig. 1 dargestellt sind. Fig. 1 zeigt einen Teil einer Fördervorrichtung 2 ohne Taschenmodul 18 und damit gemäß dem Stand der Technik.

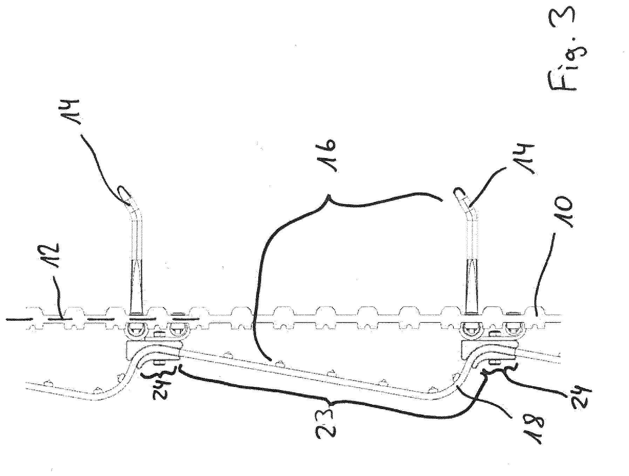

An beiden Förderbandabschnitten 10 sind verbindende Strebenelemente 32 angeordnet. Die Förderbandabschnitte 10 definieren zwischen sich eine insbesondere ebene Förderbandfläche 12, dessen Anordnung in Fig. 2 angedeutet ist. Die Fördervorrichtung 2 umfasst mehrere von der Förderbandfläche 12 einseitig abstehende und sich am Förderband 6 abstützende Mitnehmereinheiten 14 (vergl. Fig. 1 bis 10). Die Mitnehmereinheiten 14 begrenzen jeweils einen Aufnahmeraum 16, welcher sich zu beiden Seiten der Förderbandfläche 12 erstreckt (vergl. Fig. 3, 4, 7, 8).

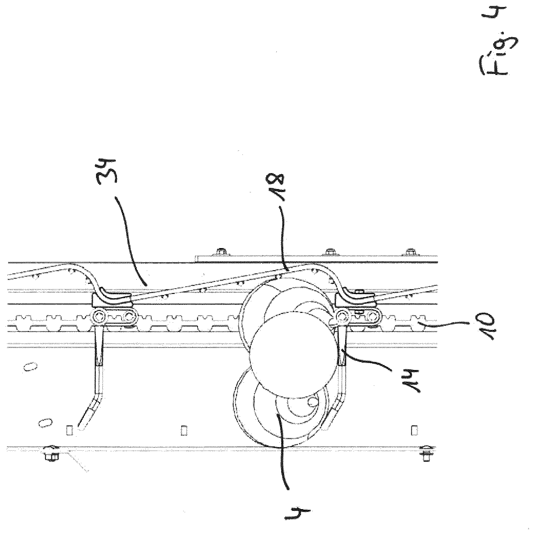

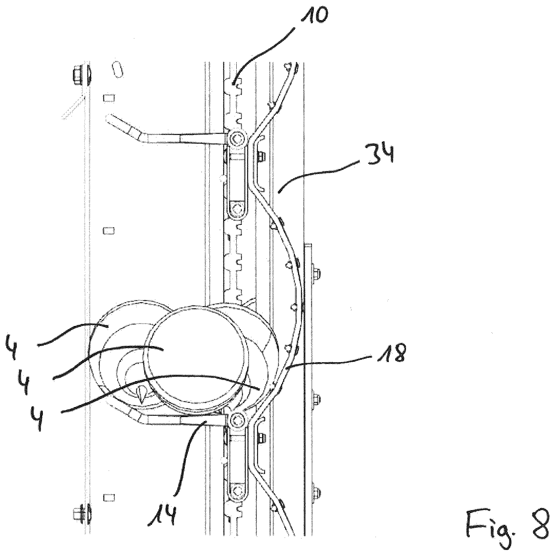

Der Teil des Aufnahmeraumes 16, der auf der der Mitnehmereinheit 14 gegenüberliegenden Seite der Förderbandfläche 12 angeordnet ist, ist durch zumindest ein lösbar befestigtes Taschenmodul 18 ausgebildet. In diesem Aufnahmeraum 16 befinden sich während der aufwärts gerichteten Förderung die Rüben 4 (vergl. Fig. 4 und 8).

Die Ausführungsformen gemäß den Fig. 2, 6 und 10 zeigen jeweils drei in Förderrichtung 8 aneinander anschließende Taschenmodule 18. Jedes dieser Taschenmodule 18 bildet genau einen Aufnahmeraum 16 mit aus. Die alternativen Ausführungsformen gemäß den Fig. 3, 4, 7 und 8 zeigen jeweils ein Taschenmodul 18, welches mehrere Aufnahmeräume 16 mit ausbildet.

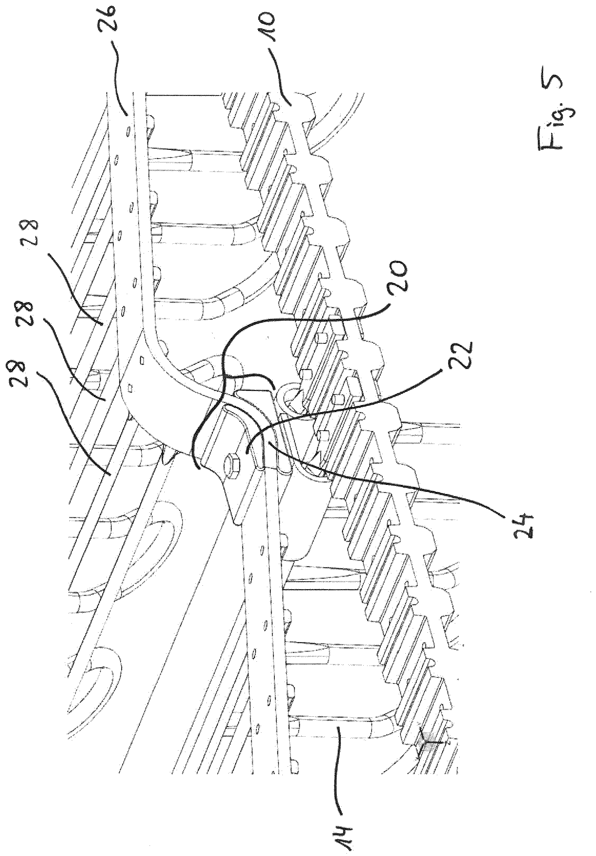

Die Fig. 5, 9, 11 und 12 zeigen unterschiedliche Ausführungsformen von Befestigungseinrichtungen 20, durch welche das Taschenmodul 18 klemmend gegenüber der Mitnehmereinheit 14 festgelegt wird. Fig. 2 zeigt Befestigungseinrichtungen 20, die durch jeweils zwei in Förderrichtung 8 aneinander anschließende Taschenmodule 18 lösbar an der Mitnehmereinheit 14 festgelegt sind. Dabei sind die Taschenmodule 18 durch die Befestigungseinheiten 20 jeweils ausschließlich an den Mitnehmereinheiten 14 festgelegt.

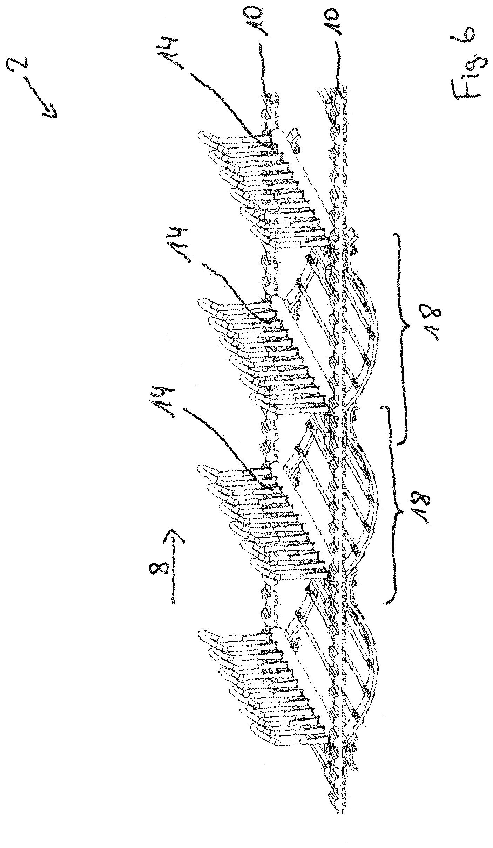

Jedes der in den Fig. 2 und 6 dargestellten Taschenmodule 18 hat vier Befestigungsbereiche 24, welche an eine jeweilige Befestigungseinrichtung 20 angrenzen. Jeweils zwei Befestigungseinrichtungen 20 sind an einer Mitnehmereinheit 14 seitlich voneinander beabstandet angeordnet.

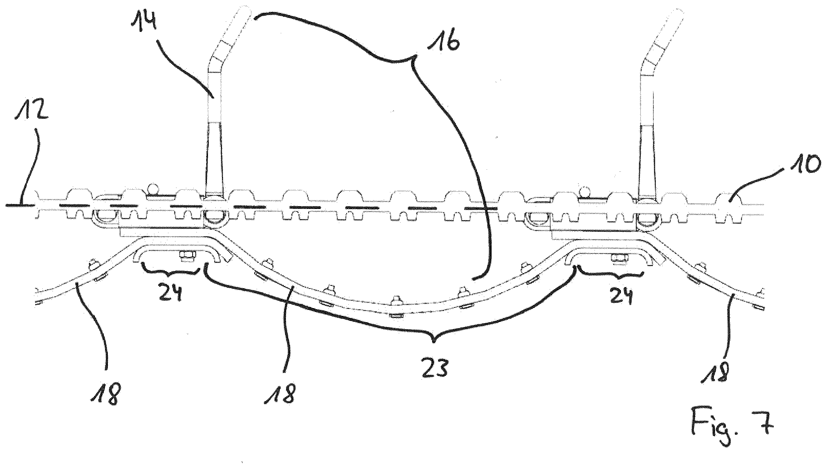

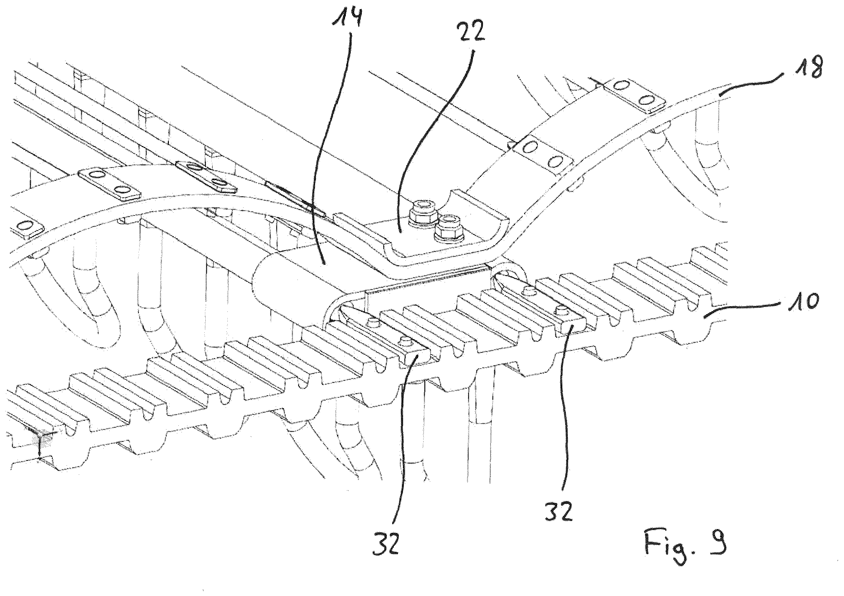

Die Befestigungseinrichtungen 20 umfassen zumindest ein eine Form des Aufnahmeraumes 16 vorgebendes und an einem Taschenmodul 18 anliegendes Formelement 22 (vergl. Fig. 5 und 9). Diese beeinflussen die Form des an ihnen anliegenden Taschenmoduls 18 zur Erreichung einer optimalen Ausformung des Aufnahmeraumes 16. Die Formelemente 22 erzeugen einen Querschnitt des Aufnahmeraumes 16, welcher in der Ausführungsform gemäß Fig. 3 die Form einer halbierten Tropfenform annimmt. Demgegenüber erzeugen die in den Fig. 7 bis 9 dargestellten Formelemente 22 eine spiegelsymmetrische Form des zwischen ihnen angeordneten Abschnitts des Taschenmoduls 18.

Die Befestigungseinrichtungen 20 gemäß der Fig. 2 und 6 legen jeweils zwei aneinander anschließende und sich überlappende Taschenmodule 18 klemmend aufeinander und gegenüber der Mitnehmereinheit 14 fest.

Die Ausführungsbeispiele gemäß der Fig. 2 bis 9 weisen jeweils zumindest ein Taschenmodul 18 mit zumindest zwei in Förderrichtung 8 benachbarten und jeweils an eine Befestigungseinrichtung 20 grenzenden Befestigungsbereichen 24 auf. Der Abstand der Befestigungsbereiche 24 ist dabei kleiner als die Länge 23 des Taschenmoduls 18 zwischen den Befestigungsbereichen 24 in einem abgerollten Zustand (vergl. Fig. 3 und 7). Dadurch, dass die Länge des Taschenmoduls 18 zwischen den Befestigungsbereichen 24 in einem Zustand, in dem das Taschenmodul 18 eine geradlinige Erstreckung hat, länger ist als der Abstand zweier benachbarter Befestigungsbereiche 24 im montierten Zustand, lassen sich taschenförmig ausgeformte Bereiche des Aufnahmeraumes 16 erzeugen.

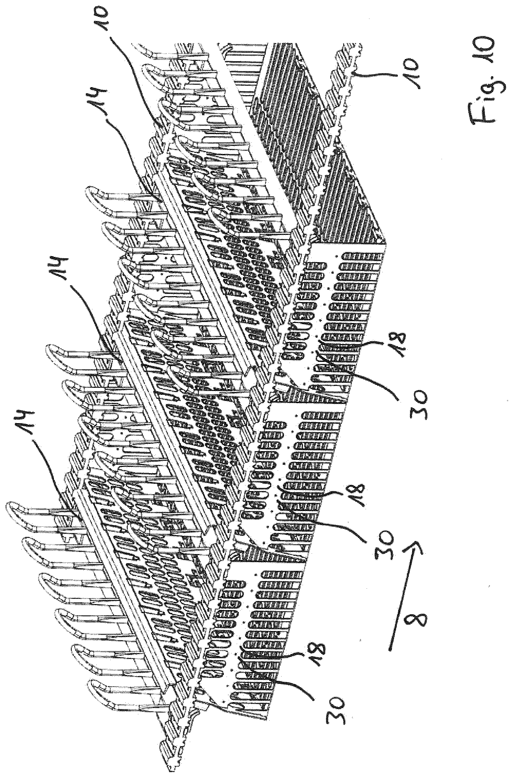

Die in den Fig. 2 und 6 dargestellten Taschenmodule 18 weisen jeweils zwei parallel angeordnete Taschenzugelemente 26 auf. Diese werden jeweils durch mehrere metallische Wandungselemente 28 miteinander verbunden. Diese Wandungselemente 28 sind äquidistant und sich quer zur Förderrichtung 8 erstreckend an den Taschenzugelementen 26 angeordnet. In der in Fig. 10 dargestellten Fördervorrichtung 2 sind die Taschenmodule 18 als formstabile Körbe 30 ausgebildet. Diese Körbe 30 sind einstückig ausgebildet.

Jeweils zwei am Förderband 6 angeordnete Strebenelemente 32 sind einer Mitnehmereinheit 14 zugeordnet, die die Strebenelemente 32 zwischen den Förderbandabschnitten 10 umschließt (vergl. Fig. 1). Die Strebenelemente 32 sind paarweise und sich quer zur Förderrichtung 8 erstreckend an den Förderbandabschnitten 10 angeordnet. Die Fig. 4 und 8 zeigen jeweils einen Abschnitt einer in eine Erntemaschine eingebauten Fördervorrichtung 2 im Betrieb mit Rüben 4. Die Erntemaschine umfasst ein Führungselement 34, welches sich zumindest in Förderrichtung 8 erstreckt und sich nicht in die Förderrichtung 8 mitbewegt. Durch dieses Führungselement 34 werden die Aufnahmeräume 16 in einem an die Förderbandabschnitte 10 grenzenden seitlichen Bereich verschlossen. Das Führungselement 34 ist dabei aus einer dargestellten Führungsstellung in eine Transportstellung überführbar.

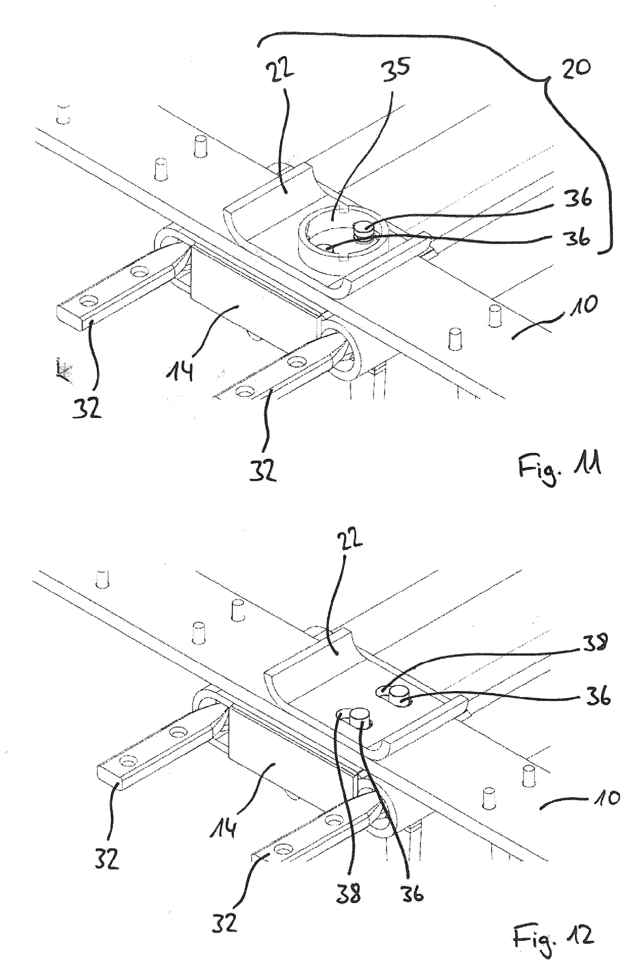

Die Befestigungseinrichtungen 20 gemäß der Fig. 5 und 9 sind jeweils durch zumindest eine Schraube an der Mitnehmereinheit 14 festzulegen. Die Befestigungseinrichtung 20 gemäß Fig. 11 legt das Taschenmodul 18 wiederum mit dem Formelement 22 klemmend an der Mitnehmereinheit 14 fest, wobei das Formelement 22 durch einen Klemmring 35 mit einem nicht umlaufenden Gewindegang an zwei ortsfest an der Mitnehmereinheit 14 festgelegten Befestigungsköpfen 36 festgelegt wird. Fig. 12 zeigt ein Formelement 22 mit zwei Ausnehmungen 38, welche wiederum unter einen Befestigungskopf 36 greifen und somit das Taschenmodul 18 klemmend festlegen.

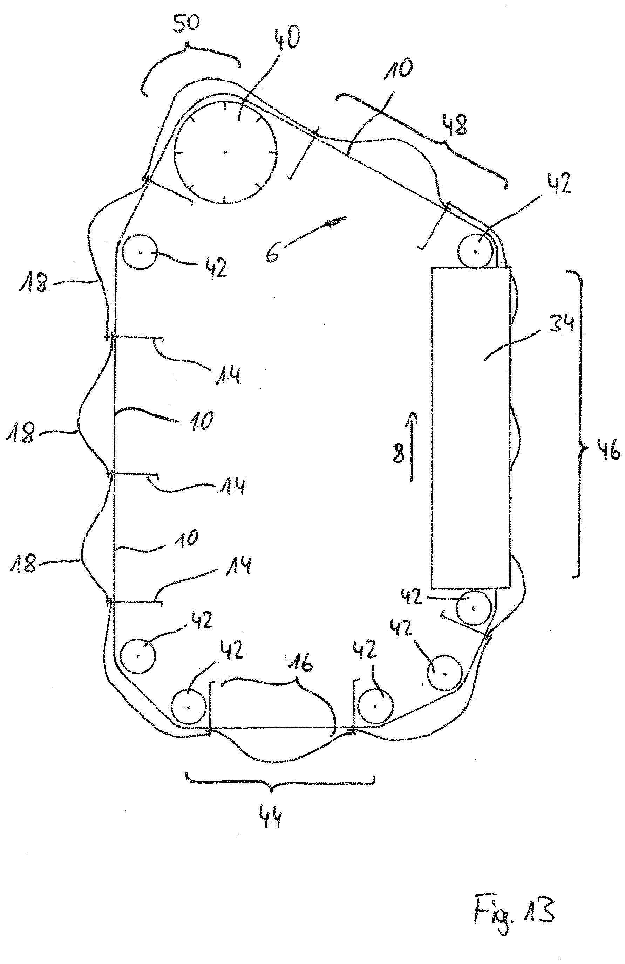

Fig. 13 ist eine schematische Darstellung einer erfindungsgemäßen Fördervorrichtung mit einem Antriebselement 40 sowie Umlenkelementen 42 sowie einer alternativen Ausführungsform des Führungselementes 34. Im unteren teilweise waagerecht verlaufenden Aufnahmeteil 44 der Fördervorrichtung 2 werden die Hackfrüchte während des Umlaufens in die Aufnahmeräume 16 gegeben, dabei wird der unterhalb des gezeigten Förderbandabschnittes 10 liegende Teil der Aufnahmeräume 16 auf der Außerseite der Fördervorrichtung 2 durch Taschenmodule 18 begrenzt. Das gegen den Uhrzeigersinn umlaufende Förderband 6 wird in einem in Förderrichtung 8 auf den Aufnahmeteil 44 folgenden Vertikalteil 46 durch ein im Querschnitt U-förmiges Führungselement 34 eingefasst, dass die im Vertikalteil 46 angeordneten Aufnahmeräume 16 mit ausbildet. Das Führungselement 34 begrenzt im Vertikalteil 46 die Aufnahmeräume 16 auf ihrer dem Taschenmodul 18 abgewandten Seite sowie seitlich, d.h. parallel zur Bildebene. Auf den Vertikalteil 46 folgt in Förderrichtung ein Abgabeteil 48 der Fördervorrichtung 2, in dem die Hackfrüchte 4 aus den Aufnahmeräumen 16 ausgeworfen werden. In einem auf den Abgabeteil 48 folgenden Antriebsteil 50 liegt das Förderband 6 an einem Antriebselement 40 an, welches die für das Umlaufen nötige Kraft auf das Förderband 6 aufbringt.

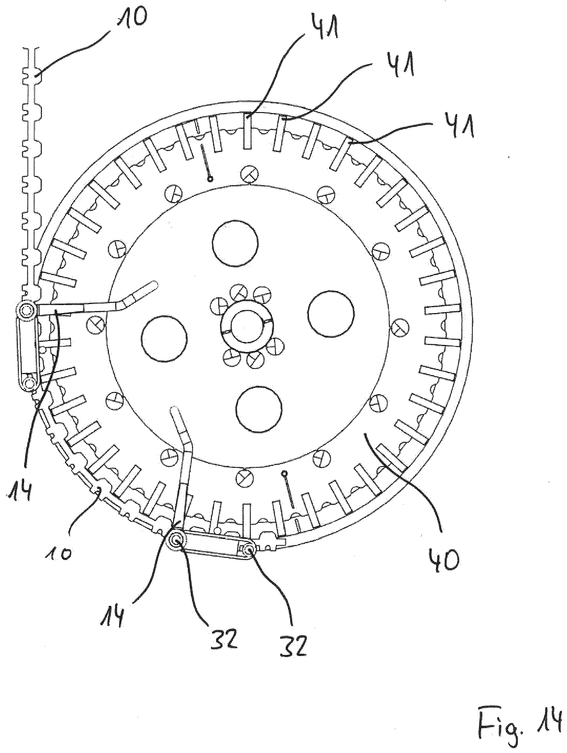

Fig. 14 verdeutlicht in einer Blickrichtung von der Mitte des Förderbandes 6, wie das Antriebselement 40 mit Antriebszähnen 41 teilweise in den dargestellten Förderbandabschnitt 10 eingreift und eine formschlüssige Verbindung ausbildet. Die gezeigten Mitnehmereinheiten 14 liegen dabei innenseitig des Antriebselements 40. Fig. 14 zeigt lediglich einen Teil des umlaufenden, endlosen Riemens Förderbandabschnitten 10.

## Patentansprüche

1. Fördervorrichtung (2) für eine aufwärtsgerichtete, insbesondere vertikale, Förderung von Rüben (4) oder anderen Hackfrüchten in Erntemaschinen, umfassend ein Förderband (6) mit zumindest zwei im Betrieb in eine Förderrichtung (8) bewegten seitlichen Förderbandabschnitten (10), die zwischen sich eine insbesondere ebene virtuelle Förderbandfläche (12) definieren, **gekennzeichnet durch** zumindest eine von der virtuellen Förderbandfläche (12) einseitig abstehende und sich am Förderband (6) abstützende Mitnehmereinheit (14), die einen Aufnahmeraum (16) begrenzt, welcher sich zu beiden Seiten der virtuellen Förderbandfläche (12) erstreckt, wobei der Teil des Aufnahmeraumes (16), der auf der der Mitnehmereinheit (14) gegenüberliegenden Seite der virtuellen Förderbandfläche (12) angeordnet ist, durch zumindest ein lösbar befestigtes Taschenmodul (18) ausgebildet ist, das zwei parallel angeordnete Taschenzugelemente (26) aufweist, die durch zumindest ein insbesondere metallisches oder aus Kunststoff bestehendes Wandungselement (28) miteinander verbunden sind, wobei das Taschenmodul (18) eine Mehrzahl von Wandungselementen (28) aufweist, die als insbesondere äquidistante und quer zur Förderrichtung verlaufende Streben ausgebildet sind, wobei das Taschenmodul (18) derart lösbar befestigt ist, dass es nicht die virtuelle Förderbandfläche (12) schneidet und beim Abbau in eine von der Förderbandfläche (12) abgewandte Richtung vom Förderband (6) lösbar ist, wobei die Förderbandabschnitte (10) die virtuelle Förderbandfläche (12) insofern definieren, als dass sich die virtuelle Förderbandfläche (12) zumindest quer zur Förderrichtung (8) geradlinig durch beide Förderbandabschnitte (10) hindurch erstreckt.

2. Fördervorrichtung (2) nach Anspruch 1, **gekennzeichnet durch** zumindest zwei in der Förderrichtung (8) aneinander anschließende Taschenmodule (18).

3. Fördervorrichtung (2) nach einem der vorhergehenden Ansprüche, **dadurch gekennzeichnet, dass** jedes Taschenmodul (18) höchstens sechs, insbesondere höchstens drei Aufnahmeräume (16) mitausbildend angeordnet ist.

4. Fördervorrichtung (2) nach einem der vorhergehenden Ansprüche, **dadurch gekennzeichnet, dass** jedes Taschenmodul (18) genau einen Aufnahmeraum (16) mitausbildend angeordnet ist.

5. Fördervorrichtung (2) nach einem der vorhergehenden Ansprüche, **dadurch gekennzeichnet, dass** durch zumindest eine Befestigungseinrichtung (20) jeweils zwei in Förderrichtung (8) aneinander anschließende Taschenmodule (18) lösbar festgelegt sind.

6. Fördervorrichtung (2) nach einem der vorhergehenden Ansprüche, **dadurch gekennzeichnet, dass** das Taschenmodul (18) zumindest im Bereich der Mitnehmereinheit (14), insbesondere an der Mitnehmereinheit (14) durch zumindest eine Befestigungseinrichtung (20) festgelegt ist.

7. Fördervorrichtung (2) nach einem der vorhergehenden Ansprüche, **dadurch gekennzeichnet, dass** das Taschenmodul (18) ausschließlich im Bereich der Mitnehmereinheit (14) durch zumindest eine Befestigungseinrichtung (20) festgelegt ist.

8. Fördervorrichtung (2) nach einem der vorhergehenden Ansprüche, **dadurch gekennzeichnet, dass** das Taschenmodul (18) zumindest im Bereich einer weiteren in Förderrichtung (8) benachbarten Mitnehmereinheit (14) oder zwischen dem Bereich der Mitnehmereinheit (14) und dem Bereich der weiteren Mitnehmereinheit (14) durch zumindest eine Befestigungseinrichtung (20) festgelegt ist.

9. Fördervorrichtung (2) nach einem der Ansprüche 5 bis 8, **dadurch gekennzeichnet, dass** die Befestigungseinrichtung (20) zumindest ein eine Form des Aufnahmeraumes (16) vorgebendes und am Taschenmodul (18) anliegendes Formelement (22) umfasst.

10. Fördervorrichtung (2) nach einem der Ansprüche 5 bis 9, **dadurch gekennzeichnet, dass** die Befestigungseinrichtung (20) zwei aneinander anschließende Taschenmodule (18) klemmend aufeinander und gegenüber der Mitnehmereinheit (14) festlegt.

11. Fördervorrichtung (2) nach einem der Ansprüche 5 bis 10, **dadurch gekennzeichnet, dass** das Taschenmodul (18) zumindest zwei in Förderrichtung (8) benachbarte und jeweils an eine Befestigungseinrichtung (20) grenzende Befestigungsbereiche (24) hat, deren Abstand kleiner ist als die Länge (3) des Taschenmoduls (18) zwischen den Befestigungsbereichen (24) in einem abgerollten Zustand.

12. Fördervorrichtung (2) nach einem der vorhergehenden Ansprüche, **dadurch gekennzeichnet, dass** das Taschenmodul (18) als formstabiler Korb (30) ausgebildet ist.

13. Fördervorrichtung (2) nach einem der vorhergehenden Ansprüche, **dadurch gekennzeichnet, dass** das Taschenmodul (18) aus Kunststoff ausgebildet ist.

14. Fördervorrichtung (2) nach einem der vorhergehenden Ansprüche, **dadurch gekennzeichnet, dass** das Taschenmodul (18) einstückig ausgebildet ist.

15. Fördervorrichtung (2) nach einem der vorhergehenden Ansprüche, **dadurch gekennzeichnet, dass** das Förderband (6) zumindest zwei, insbesondere genau zwei an den Förderbandabschnitten (10) angeordnete und der Mitnehmereinheit (14) zugeordnete Strebenelemente (32) aufweist.

16. Erntemaschine für Rüben (4) oder andere Hackfrüchte mit einer Fördervorrichtung (2) nach einem der vorhergehenden Ansprüche.

17. Erntemaschine nach Anspruch 16, **dadurch gekennzeichnet, dass** der Aufnahmeraum (16) während des Betriebs der Fördervorrichtung (2) zumindest abschnittsweise an zumindest ein sich in Förderrichtung (8) erstreckendes und sich insbesondere nicht in Förderrichtung (8) bewegendes Führungselement (34) angrenzt.

18. Erntemaschine nach Anspruch 17, **dadurch gekennzeichnet, dass** das Führungselement (34) aus einer Führungsstellung in eine Transportstellung überführbar ist.

19. Erntemaschine nach Anspruch 16 bis 18, **gekennzeichnet durch** eine den maximalen Abstand des Taschenmoduls (18) von der Förderbandfläche (12) in einer Sicherungsstellung begrenzende Sicherungsvorrichtung.

## Claims

1. Conveyor apparatus (2) for upwardly directed, in particular vertical, conveying of beets (4) or other root crops in harvesting machines, comprising a conveyor belt (6) having at least two lateral conveyor belt portions (10) which are moved in a conveying direction (8) during operation and define therebetween an in particular planar virtual conveyor belt surface (12), **characterized by** at least one carrier unit (14) protruding from the virtual conveyor belt surface (12) on one side and supported on the conveyor belt (6), which carrier unit delimits a receiving space (16) extending on both sides of the virtual conveyor belt surface (12), wherein the part of the receiving space (16) which is arranged on the side of the virtual conveyor surface (12) opposite the carrier unit (14) is formed by at least one releasably fastened pocket module (18) having two pocket pull elements (26) which are arranged in parallel and are connected to one another by at least one wall element (28), which is in particular metal or made of plastics material, wherein the pocket module (18) has a plurality of wall elements (28) which are formed as in particular equidistant struts extending transversely to the conveying direction, wherein the pocket module (18) is releasably fastened in such a way that it does not intersect the conveyor belt surface (12) and is releasable from the conveyor belt (6) in a direction away from the conveyor belt surface (12) during dismantling, wherein the conveyor belt portions (10) define the virtual conveyor belt surface (12) insofar as the virtual conveyor belt surface (12) extends in a straight line through both conveyor belt portions (10) at least transversely to the conveying direction (8).

2. Conveyor apparatus (2) according to claim 1, **characterized by** at least two pocket modules (18) which adjoin one another in the conveying direction (8).

3. Conveyor apparatus (2) according to either of the preceding claims, **characterized in that** each pocket module (18) is arranged so as to co-form at most six, in particular at most three receiving spaces (16).

4. Conveyor apparatus (2) according to any of the preceding claims, **characterized in that** each pocket module (18) is arranged so as to co-form exactly one receiving space (16).

5. Conveyor apparatus (2) according to any of the preceding claims, **characterized in that** two pocket modules (18) adjoining one another in the conveying direction (8) are releasably fixed in each case by at least one fastening device (20).

6. Conveyor apparatus (2) according to any of the preceding claims, **characterized in that** the pocket module (18) is fixed at least in the region of the carrier unit (14), in particular on the carrier unit (14), by at least one fastening device (20).

7. Conveyor apparatus (2) according to any of the preceding claims, **characterized in that** the pocket module (18) is fixed exclusively in the region of the carrier unit (14) by at least one fastening device (20).

8. Conveyor apparatus (2) according to any of the preceding claims, **characterized in that** the pocket module (18) is fixed at least in the region of a further carrier unit (14) adjacent in the conveying direction (8) or between the region of the carrier unit (14) and the region of the further carrier unit (14) by at least one fastening device (20).

9. Conveyor apparatus (2) according to any of claims 5 to 8, **characterized in that** the fastening device (20) comprises at least one shaping element (22) which defines a shape of the receiving space (16) and rests against the pocket module (18).

10. Conveyor apparatus (2) according to any of claims 5 to 9, **characterized in that** the fastening device (20) fixes two adjoining pocket modules (18) in a clamping manner on one another and with respect to the carrier unit (14).

11. Conveyor apparatus (2) according to any of claims 5 to 10, **characterized in that** the pocket module (18) has at least two fastening regions (24) which are adjacent in the conveying direction (8) and each adjoin a fastening device (20), the distance of which regions is smaller than the length (3) of the pocket module (18) between the fastening regions (24) in an unrolled state.

12. Conveyor apparatus (2) according to any of the preceding claims, **characterized in that** the pocket module (18) is designed as a dimensionally stable basket (30).

13. Conveyor apparatus (2) according to any of the preceding claims, **characterized in that** the pocket module (18) is made of plastics material.

14. Conveyor apparatus (2) according to any of the preceding claims, **characterized in that** the pocket module (18) is formed in one piece.

15. Conveyor apparatus (2) according to any of the preceding claims, **characterized in that** the conveyor belt (6) has at least two, in particular exactly two strut elements (32) arranged on the conveyor belt portions (10) and assigned to the carrier unit (14).

16. Harvesting machine for beets (4) or other root crops, having a conveyor apparatus (2) according to any of the preceding claims.

17. Harvesting machine according to claim 16, **characterized in that** during operation of the conveyor apparatus (2), the receiving space (16) is adjacent at least in portions to at least one guide element (34) which extends in the conveying direction (8) and which in particular does not move in the conveying direction (8).

18. Harvesting machine according to claim 17, **characterized in that** the guide element (34) can be transferred from a guide position into a transport position.

19. Harvesting machine according to either claim 16 or claim 18, **characterized by** a securing apparatus delimiting the maximum distance of the pocket module (18) from the conveyor belt surface (12) in a securing position.

## Revendications

1. Dispositif de transport (2) pour un transport ascendant, en particulier vertical, de betteraves (4) ou d'autres cultures sarclées dans des machines de récolte, comprenant une bande transporteuse (6) comportant au moins deux sections de bande transporteuse (10) latérales déplacées dans une direction de transport (8) durant le fonctionnement, lesquelles définissent entre elles une surface de bande transporteuse virtuelle (12) en particulier plane,
**caractérisé par** au moins une unité entraîneuse (14) faisant saillie d'un côté de la surface de bande transporteuse virtuelle (12) et s'appuyant sur la bande transporteuse (6), laquelle unité entraîneuse délimite un espace de réception (16) qui s'étend des deux côtés de la surface de bande transporteuse virtuelle (12), la partie de l'espace de réception (16) disposée sur le côté de la surface de bande transporteuse virtuelle (12) opposé à l'unité entraîneuse (14) étant formée par au moins un module de sacs (18) fixé de façon amovible, lequel module présente deux éléments de traction de sacs (26) disposés en parallèle, lesquels sont connectés l'un à l'autre par au moins un élément de paroi (28), en particulier métallique ou composé de matière plastique, le module de sacs (18) présentant une pluralité d'éléments de paroi (28) qui sont réalisés comme entretoises, en particulier équidistantes et s'étendant perpendiculairement à la direction de transport, le module de sacs (18) étant fixé de façon amovible de telle sorte qu'il ne coupe pas la surface de bande transporteuse virtuelle (12) et que, lors du démontage, il est détachable de la bande transporteuse (6) dans une direction opposée à la surface de bande transporteuse virtuelle (12), les sections de bande transporteuse (10) définissant la surface de bande transporteuse virtuelle (12) dans la mesure où la surface de bande transporteuse virtuelle (12) s'étend au moins perpendiculairement à la direction de transport (8) de manière rectiligne à travers les deux sections de bande transporteuse (10).

2. Dispositif de transport (2) selon la revendication 1, **caractérisé par** au moins deux modules de sacs (18) adjacents dans la direction de transport (8).

3. Dispositif de transport (2) selon l'une quelconque des revendications précédentes, **caractérisé en ce que** chaque module de sacs (18) est disposé de manière à participer à la formation d'au maximum six, en particulier au maximum trois, espaces de réception (16).

4. Dispositif de transport (2) selon l'une quelconque des revendications précédentes, **caractérisé en ce que** chaque module de sacs (18) est disposé de manière à participer à la formation d'exactement un espace de réception (16).

5. Dispositif de transport (2) selon l'une quelconque des revendications précédentes, **caractérisé en ce que** deux modules de sacs (18) adjacents dans la direction de transport (8) sont fixés de manière amovible par au moins un dispositif de fixation (20).

6. Dispositif de transport (2) selon l'une quelconque des revendications précédentes, **caractérisé en ce que** le module de sacs (18) est fixé au moins dans la zone de l'unité entraîneuse (14), en particulier sur l'unité entraîneuse (14), par au moins un dispositif de fixation (20).

7. Dispositif de transport (2) selon l'une quelconque des revendications précédentes, **caractérisé en ce que** le module de sacs (18) est fixé exclusivement dans la zone de l'unité entraîneuse (14) par au moins un dispositif de fixation (20).

8. Dispositif de transport (2) selon l'une quelconque des revendications précédentes, **caractérisé en ce que** le module de sacs (18) est fixé au moins dans la zone d'une autre unité entraîneuse (14) adjacente dans la direction de transport (8) ou entre la zone de l'unité entraîneuse (14) et la zone de l'autre unité entraîneuse (14) par au moins un dispositif de fixation (20).

9. Dispositif de transport (2) selon l'une quelconque des revendications 5 à 8, **caractérisé en ce que** le dispositif de fixation (20) comprend au moins un élément de forme (22) déterminant une forme de l'espace de réception (16) et adjacent au module de sacs (18).

10. Dispositif de transport (2) selon l'une quelconque des revendications 5 à 9, **caractérisé en ce que** le dispositif de fixation (20) fixe deux modules de sacs (18) adjacents, par serrage l'un sur l'autre et l'un en face de l'autre, à l'unité entraîneuse (14).

11. Dispositif de transport (2) selon l'une quelconque des revendications 5 à 10, **caractérisé en ce que** le module de sacs (18) a au moins deux zones de fixation (24) adjacentes dans la direction de transport (8) et contiguës respectivement à un dispositif de fixation (20), la distance entre ces zones de fixation étant inférieure à la longueur (3) du module de sacs (18) entre les zones de fixation (24) dans un état déroulé.

12. Dispositif de transport (2) selon l'une quelconque des revendications précédentes, **caractérisé en ce que** le module de sacs (18) est réalisé comme panier (30) de forme stable.

13. Dispositif de transport (2) selon l'une quelconque des revendications précédentes, **caractérisé en ce que** le module de sacs (18) est réalisé en matière plastique.

14. Dispositif de transport (2) selon l'une quelconque des revendications précédentes, **caractérisé en ce que** le module de sacs (18) est réalisé d'un seul tenant.

15. Dispositif de transport (2) selon l'une quelconque des revendications précédentes, **caractérisé en ce que** la bande transporteuse (6) présente au moins deux, en particulier exactement deux, éléments d'entretoise (32) disposés le long des sections de bande transporteuse (10) et associés à l'unité entraîneuse (14).

16. Machine de récolte pour betteraves (4) ou d'autres cultures sarclées, comprenant un dispositif de transport (2) selon l'une quelconque des revendications précédentes.

17. Machine de récolte selon la revendication 16, **caractérisée en ce que** l'espace de réception (16), durant le fonctionnement du dispositif de transport (2), est adjacent au moins par sections à au moins un élément de guidage (34) s'étendant dans la direction de transport (8) et se déplaçant, en particulier pas dans la direction de transport (8).

18. Machine de récolte selon la revendication 17, **caractérisée en ce que** l'élément de guidage (34) peut être déplacé d'une position de guidage à une position de transport.

19. Machine de récolte selon la revendication 16 à 18, **caractérisé par** un dispositif de sécurité limitant la distance maximale du module de sacs (18) de la surface de bande transporteuse (12) dans une position de sécurité.
